# EUROPEAN PATENT APPLICATION

(11) **EP 4 769 074 A1**
(43) Date of publication of application: **01.07.2026**
(21) Application number: 24425064.3
(22) Date of filing: 24.12.2024
(51) Int. Cl.: G06F 3/01, G02B 27/00, G02B 27/01

(54) **HEAD MOUNTABLE DEVICE WITH AN EYE-TRACKING SYSTEM AND METHOD FOR TRACKING A RESPECTIVE EYE OF A USER WEARING SUCH A HEAD MOUNTABLE DEVICE**

(71) Applicant: Luxottica S.r.l., 32021 Agordo (BL) (IT)
(72) Inventor: Bani, Daniele, 32021 Agordo (BL) (IT); Carminati, Marco, 20133 Milano (MI) (IT); Melloni, Filippo, 32021 Agordo (BL) (IT); Merigo, Luca, 32021 Agordo (BL) (IT); Ongarello, Tommaso, 32021 Agordo (BL) (IT)
(74) Representative: Biallo, Dario

(57) **Abstract**

The present invention relates to a head mountable device (100) comprising an eye-tracking system (200), comprising a first detecting subsystem (210) configured to detect at least one first gaze parameter of a respective eye to be tracked when a user wears the head mountable device (100) so as to generate a first signal, wherein the first detecting subsystem (210) is of a low power monitoring type, and a second detecting subsystem (220) configured to detect at least one second gaze parameter of the respective eye so as to generate a second signal, the second detecting subsystem (220) comprises a plurality of detecting elements (221, 222), a processing and control unit (230) associated to the first detecting subsystem (210) and to the second detecting subsystem (220) configured to estimate a region of interest (400) among a predetermined plurality of regions of interest on the basis of said first signal, wherein the estimated region of interest (400) comprises the direction of the gaze of a respective eye to be tracked, the processing and control unit (230) is configured to selectively activate one or more of the detecting elements (221, 222) on the basis of the estimated region of interest (400) for subsequently estimating the direction of the gaze of the respective eye to be tracked inside the estimated region of interest (400) on the basis of said second signal with optimized hardware and computing energy consumption.

## Description

The present invention refers to a head mountable device with an eye-tracking system.

The present invention also refers to a method for tracking a respective eye of a user wearing such a head mountable device.

Head mountable device encompasses any type of device having at least one lens designed to be worn over at least one eye of a wearer and having a frame configured to be mounted on a head of the wearer.

As known, smart eyewear are a particular type of head mountable device.

Smart eyewear comprise electronic devices adapted to operate as an electronic calculator capable of supporting the activities carried out by the user wearing them.

In more details, the electronic devices are for example capable of playing audio and video, launch and run software applications, recognize shapes and objects placed in the surrounding environment.

More in particular, the electronic devices usually comprise a processing and control unit and sensors integrated into the spectacle frame or temples.

For example, it is common to provide smart eyewear with an eye-tracking system in order to activate/deactivate some functionalities of the smart eyewear, for example for augmented and mixed reality, and/or monitoring the movement of the eye for medical, psychological, commercial and marketing purposes, e.g. for tracking the direction of the gaze towards a shop window or a supermarket shelf.

Several different type of eye-tracking systems are currently known.

An eye-tracking system of a first type, which is the most widely used, comprises one or more sources for illuminating the eye under tracking and one or more cameras for capturing the movement of the eye. Such a system is characterized by high hardware and computing energy consumption that cannot be supported for a satisfactory time by the integrated battery of a known eyewear. In addition, such a system is bulky and therefore cannot be embedded in smart eyewear that must appear identical to the common eyewear.

In view of the above mentioned drawbacks an eye-tracking system of a second type is becoming more attractive, which comprises one or more infrared and/or near-infrared wavelengths sources that illuminate the eye to be tracked and detectors to detect the optical signal reflected by the illuminated eye; in these systems the direction of the gaze is obtained on the basis of the detected optical signal. Since these systems operate at infrared and/or near-infrared wavelengths that are outside the sensitivity range of the human-eye, they do not interfere with the sight capacity.

In the present description for infrared wavelengths it is intended to indicate wavelengths comprised between 700nm and 1mm.

For near-infrared wavelengths it is intended to indicate wavelengths comprised between 700nm and 10µm.

However, also known eye-tracking systems of the second type require high computational cost for estimating the gaze direction. The consequence is a high power consumption of the eye-tracking system and high overall energy expenses.

The object of the present invention is to realize a head mountable device with an eye-tracking system and a method for tracking a respective eye of a user wearing such a head mountable device with reduced computational costs and optimized power consumption with respect to known types.

This and other objects according to the present invention are achieved by making a head mountable device with an eye-tracking system as set forth in claim 1, and a method for tracking a respective eye of a user wearing such a head mountable device as set forth in claim 7.

Further characteristics of the head mountable device with an eye-tracking system and of the method for tracking a respective eye of a user wearing such a head mountable device are the objects of the dependent claims. The characteristics and advantages of the head mountable device with an eye-tracking system and the method for tracking a respective eye of a user wearing such a head mountable device according to the present invention will be more evident from the following exemplary though non-limiting description, referring to the attached schematic drawings in which:
- Figure 1 is a perspective view of a head mountable device comprising an eye-tracking system according to the present invention;
- Figure 2 is a schematic perspective view of a portion of the head mountable device of figure 1;

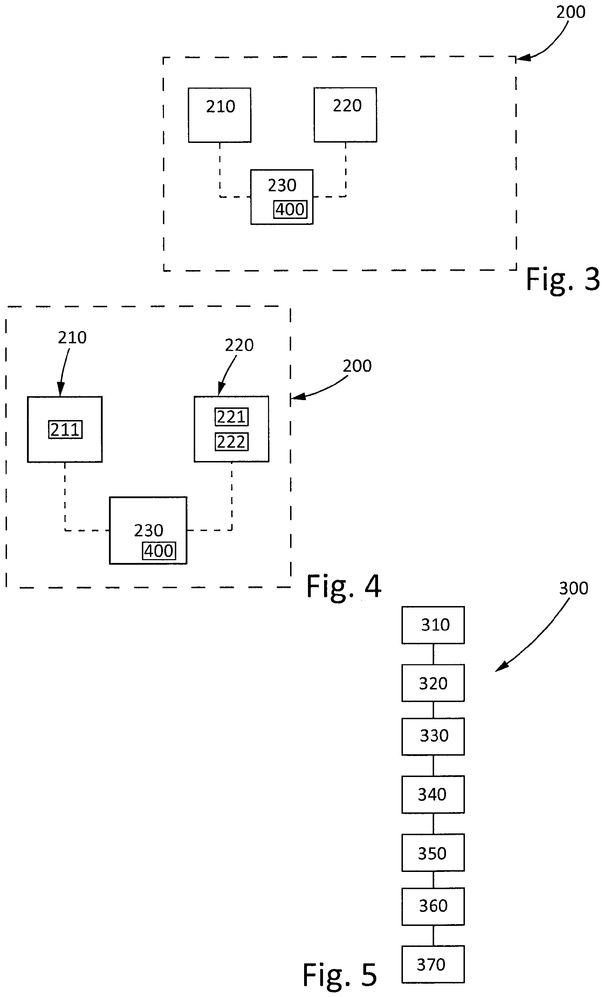

- Figure 3 is a first block scheme representing the eye-tracking system of a head mountable device according to the present invention;

- Figure 4 is a second block scheme representing a particular embodiment of the eye-tracking system of a head mountable device according to the present invention;
- Figure 5 is a flow chart of a method for tracking a respective eye of a user wearing such a head mountable device according to the present invention.

With reference to the figures, a head mountable device is shown, globally referred to as 100.

The head mountable device 100 may comprise at least one lens 110 configured to be worn over at least one eye of a user, and a frame 120 configured to be mounted on a head of the user.

For example, as shown in the attached figures, the head mountable device 100 can be an eyewear comprising the frame 120 which in turn comprises a front 121 supporting the at least one lens 110, and two temples coupled to the front 121.

For example, the eyewear is an eyeglass and in this case it can comprise two lenses 110.

The head mountable device 100 can be also a ski-mask or a mask sunglass and in this case it can comprise a single lens 110.

The head mountable device 100 advantageously comprises an eye-tracking system 200.

The eye-tracking system 200 comprises a first detecting subsystem 210. The first detecting subsystem 210 is configured to detect at least one first gaze parameter of a respective eye to be tracked when a user wears the head mountable device 100 so as to generate a first signal.

The first signal is indicative of the at least one first gaze parameter.

Moreover, the first detecting subsystem 210 is of a low power monitoring type.

The head mountable device 100 comprises a second detecting subsystem 220. The second detecting subsystem 220 is configured to detect at least one second gaze parameter of the respective eye to be tracked when a user wears the head mountable device 100 so as to generate a second signal.

The second signal is indicative of the at least one second gaze parameter.

The first detecting subsystem 210 can be associated to the at least one lens 110 and/or to the frame 120 of the head mountable device 100.

The second detecting subsystem 220 can be associated to the at least one lens 110 and/or to the frame 120 of the head mountable device 100.

Moreover, the second detecting subsystem 220 comprises a plurality of detecting elements 221, 222. In particular, the detecting elements 221, 222 are attached to or at least partially embedded into the at least one lens 110 or frame 120.

The detecting elements 221, 222 are configured to detect the at least one second gaze parameter.

In the present description the expression "detecting elements" is meant to indicate means for detecting.

In the case in which the detecting elements are optical detectors, the detecting elements comprise a source and a detector.

The eye-tracking system 200 comprises a processing and control unit 230.

The processing and control unit 230 can be associated to the head mountable device 100, for example embedded into the frame 120 or attached to the frame 110, or can be external to the head mountable device 100.

The processing and control unit 230 is associated to the first detecting subsystem 210.

Moreover, the processing and control unit 230 is associated to the second detecting subsystem 220. In this case, the processing and control unit 230 is associated to the detecting elements 221, 222.

In other words, the processing and control unit 230 is in data communication with the first detecting subsystem 210 and with the second detecting subsystem 220.

For example, the processing and control unit 230 is a microcontroller.

Preferably, the eye-tracking system 200 may comprise also a battery (not shown) associated to the processing and control unit 230 and/or the first detecting subsystem and/or the detecting elements 221, 222 so as to electrically supply them.

Preferably, the eye-tracking system 200 may also comprise a wireless communication module (not shown) associated to the processing and control unit 230 configured to communicate in a wireless manner with an electronic terminal, such as a smartphone.

The processing and control unit 230 is configured to receive the first signal and the second signal. Preferably, the first signal and the second signal are electrical signals.

Preferably, the first signal and the second signal may be analog or digital.

The processing and control unit 230 is configured to estimate a region of interest 400 among a predetermined plurality of regions of interest on the basis of the first signal.

The estimated region of interest 400 comprises the direction of the gaze of a respective eye to be tracked. For example, the region of interest may be a solid angle comprising the direction of gaze of a respective eye to be tracked.

For example, the region of interest may be the projection of the solid angle (comprising the direction of gaze of a respective eye to be tracked) on the surface of the at least one lens 110 of the head mountable device 100. The number, size and shape of the regions of interest illustrated in the attached figures are exemplary and non-limiting.

Preferably, the plurality of regions of interest are stored in a memory (not shown) of the processing and control unit 230.

Moreover, the processing and control unit 230 is configured to selectively activate one or more of the detecting elements 221, 222 on the basis of the estimated region of interest 400 for subsequently estimating the direction of the gaze of the respective eye to be tracked inside the estimated region of interest 400 on the basis of the second signal.

The estimated region of interest is a rough estimation of the direction of the gaze of a respective eye to be tracked. The second subsystem 220 allows to perform a punctual estimation of the direction of the gaze of a respective eye to be tracked inside said estimated region of interest by activating only relevant detecting elements 221, 222. In other words, the processing and control unit 230 is configured to activate, on the basis of the estimated region of interest, only detecting elements 221, 222 that are necessary to improve the accuracy of the rough estimation.

For example, for one estimated region of interest, the detecting elements 221, 222 configured to be activated are less than the detecting elements 221, 222 associated to the head mountable device 100.

The association between each predetermined region of interest and the detecting elements 221, 222 to be activated is predefined. For example, this association is stored in the memory of the processing and control unit 230.

Preferably, the detecting elements 221, 222 comprise a plurality of infrared radiation sources 221. Each of the infrared radiation sources 221 is configured to be selectively activated by the processing and control unit 230 so as to emit a respective infrared radiation towards the respective eye to be tracked.

Preferably, the detecting elements 221, 222 comprise a plurality of infrared detectors 222. Each of the infrared detectors 222 is configured to be selectively activated by the processing and control unit 230 so as to detect a respective reflection signal reflected by the respective eye indicative of the at least one second gaze parameter in order to generate the second signal. The respective reflection signal is the signal reflected by the respective eye in response to the respective infrared radiation emitted.

For example, the at least one second gaze parameter may be the azimuth and elevation rotation angles of the respective eye to be tracked.

The amount of infrared radiation received by each infrared detectors 222 is associated to the at least one second gaze parameter as for example the reflection signal corresponding to the azimuth and elevation rotation angles of the eye, according to known methods. Preferably, the second detecting subsystem 220 may comprise at least two infrared radiation sources 221 for each eye to be tracked. For example, the infrared radiation sources 221 are four.

In particular, each infrared radiation source 221 is directed towards the eye to be tracked. For example the infrared radiation sources 221 are associated to the frame 120 so as to face the eye of the user. Preferably, the infrared radiation sources 221 are LEDs. Preferably, the second detecting subsystem 220 may comprise at least one infrared detector 222 for each infrared radiation source 221. For example, the infrared detectors 222 are four.

In particular, each infrared detector 222 is configured to detect the respective reflection signal reflected by the respective eye to be tracked at the infrared wavelengths, preferably at near-infrared wavelengths. For example the infrared detectors 222 may be made as solid-state semiconductor detectors, for example as photodiodes. For example infrared detectors 222 may be made of silicon or other semiconductors, or other materials such as solution-processable ones. Preferably, the processing and control unit 230 is configured to selectively activate the detecting elements 221, 222 in time sequence.

In more detail, the processing and control unit 230 is configured to activate at least one infrared radiation source 221 and at least one corresponding infrared detectors 222 in time sequence.

In other words, on the basis of the estimated region of interest 400, the processing and control unit 230 is configured to activate at least one infrared radiation source 221 and at least one corresponding infrared detector 222 while maintaining other infrared radiation source 221 and/or infrared detectors 222 deactivated, and subsequently repeating this operation with other infrared radiation sources 221 and/or other infrared detectors 222.

For example, in the case in which the infrared radiation sources 221 and the infrared detectors 222 are in number equal to two, respectively, the processing and control unit 230 is configured to activate one infrared radiation source 221 (or both infrared radiation sources 221) and one infrared detector 222 (or both infrared detectors 222) and subsequently activate the other infrared radiation source 221 (or both infrared radiation sources 221) and one infrared detector 221 (or both infrared detectors 222), on the basis of the estimated region of interest 400.

Preferably, the processing and control unit 230 is configured to selectively activate a first subset of the infrared radiation sources 221 on the basis of the estimated region of interest 400.

In this case, only the first subset of infrared radiation sources 221 may be activated by the processing and control unit 230 among the infrared radiation sources 221 associated to the head mountable device 100. Moreover, the processing and control unit 230 is configured to activate the infrared radiation sources 221 of the first subset in time sequence.

Preferably, the processing and control unit 230 is configured to selectively activate a second subset of said infrared detectors 222 for each activated infrared radiation source 221 on the basis of the estimated region of interest 400.

In this case, only the second subset of infrared detectors 222 may be activated by the processing and control unit 230 among the infrared detectors 222 associated to the head mountable device 100.

Moreover, the processing and control unit 230 is configured to activate the infrared detectors 222 of the second subset in time sequence.

Preferably, the predetermined regions of interest are in number equal to a first predefined number.

Preferably, the infrared radiation sources 221 are in number equal to a second predefined number.

Preferably, the infrared detectors 222 are in number equal to a third predefined number.

Optionally, the infrared radiation sources 221 of the first subset are in number less than the second predefined number.

Optionally, the infrared detectors 222 of the second subset are in number less than the third predefined number.

For example, the first predefined number is equal to four, the second predefined number is equal to four, the third predefined number is equal to four. In this case, the first subset is in number equal to three, the second subset is in number equal to three or two or one.

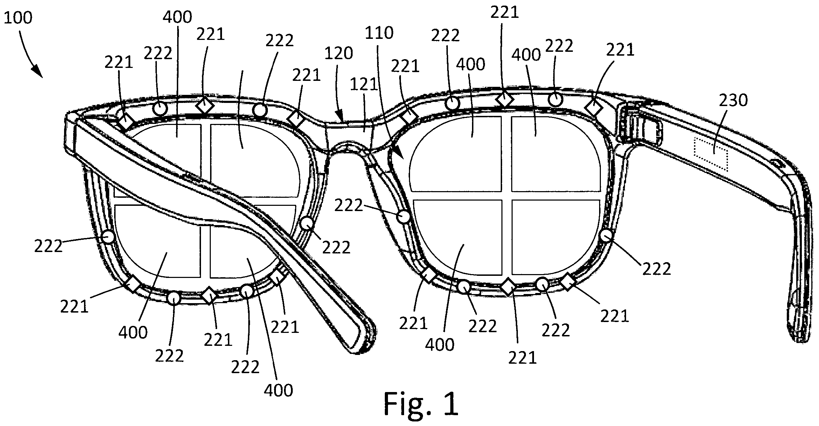

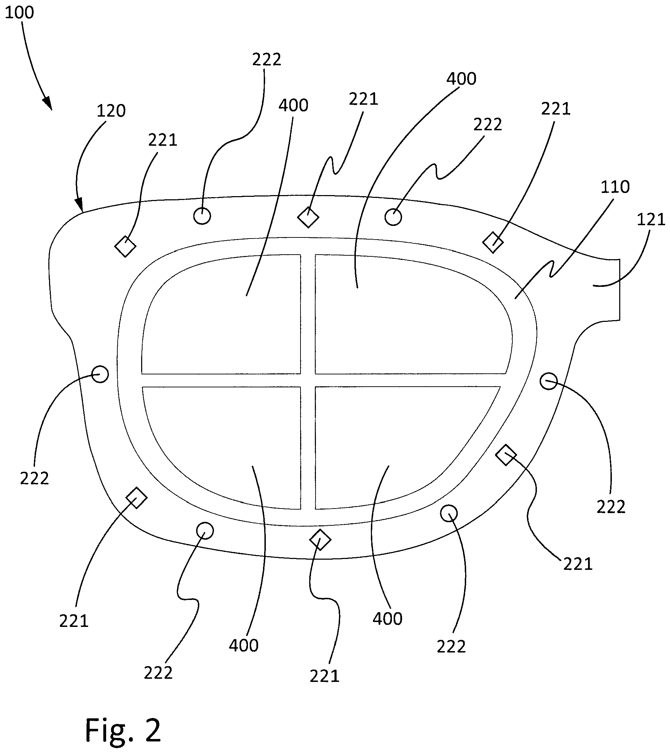

For example, as shown in figures 1-2, the predetermined regions of interest, the infrared radiation sources 221 and the infrared detectors 222 may be respectively more than four.

For example, the processing and control unit 230 is configured to activate one infrared radiation source 221 and two infrared detectors 222, and subsequently another infrared radiation source 221 and three infrared detectors 222, and subsequently another infrared radiation source 221 and two infrared detectors 222, on the basis of the estimated region of interest 400. Preferably, the first detecting subsystem 210 comprises a plurality of sets of capacitive electrodes 211. The plurality of sets of capacitive electrodes 211 is associated to the at least one lens 110.

For example, the plurality of sets of capacitive electrodes 211 is embedded in the at least one lens 110. In particular, the plurality of sets of capacitive electrodes 211 may be made in the form of a film structure.

The plurality of sets of capacitive electrodes 211 is configured to detect the at least one first gaze parameter so as to generate the first signal. Optionally, each set of capacitive electrodes is associated to a respective predetermined region of interest.

Optionally, each set of capacitive electrodes 211 is configured to generate a respective signal on the basis of the at least one first gaze parameter detected. In this case the first signal is the combined output of said respective signals of each set of capacitive electrodes 211, and the estimated region of interest is the region on the at least one lens 110 from which the strongest respective signals (among all generated respective signals) come, according to known methods. For example, the at least one first gaze parameter comprises the rotation of the respective eye to be tracked. In this case, such a rotation causes a perturbation of the electrical fields surrounding the respective eye which can be detected by the capacitive electrodes.

For example, the at least one first gaze parameter comprises the blinking of the respective eye to be tracked. In this case during the act of blinking, the electric field between the eyes and the at least one lens 110 is even more perturbed with respect to the sole eye rotation, since the eyelid and eyelashes movement increases the dielectric properties of the eye-to-lens system.

Alternatively, the first detecting subsystem 210 may comprise other passive and low power technologies, as for example electrostatic sensors, tunnel magneto resistive sensors, RGB detectors, acoustic and ultrasound sensors, mm-wave radars.

The present invention also relates to a method 300 for tracking a respective eye of a user wearing the head mountable device 100 that comprises the eye-tracking system 200.

The eye-tracking system 200 is configured for implementing the method 300.

In particular, the method 300 can be implemented by means of a computer program or software loaded into the memory of the processing and control unit 230; such a computer program thus comprises instructions that induce the eye-tracking system 200 to implement the method 300 when the processing and control unit 230 runs the program.

The method 300 needs that the user wears the head mountable device 100.

The method 300 comprises the steps:
- detecting 310 the at least one first gaze parameter so as to generate 320 the first signal by means of the first detecting subsystem 210,
- estimating 330 a region of interest 400 among the predetermined plurality of regions of interest on the basis of the generated first signal by means of the processing and control unit 230, wherein the estimated region of interest 400 comprises the direction of the gaze of a respective eye to be tracked,
- selectively activating 340 one or more of the detecting elements 221, 222 on the basis of the estimated region of interest 400 by means of the processing and control unit 230 so as to detect 350 at least one second gaze parameter in order to generate 360 a second signal by means of the second detecting subsystem 220,
- estimating 370 the direction of the gaze of the respective eye to be tracked inside the estimated region of interest 400 on the basis of the generated second signal.

The first detecting subsystem 210 detects 310 the at least one first gaze parameter and generates 320 a first signal which is indicative of the detected at least one first gaze parameter.

Preferably the first detecting subsystem 210 is configured to detect the at least one first gaze parameter continuously in time. In this case the first detecting subsystem 210 may be engaged for basic monitoring gaze direction operations.

The first signal is received by the processing and control unit 230 so that it can estimate 330 a region of interest 400 among the predetermined plurality of regions of interest.

Once that the region of interest is estimated 330, the processing and control unit 330 selectively activates 340 one or more detecting elements 221, 222 on the basis of the estimated region of interest 400.

At this point, the second detecting subsystem 220 detects 350 the at least one second gaze parameter and generates 360 the second signal by means of said one or more detecting elements 221, 222 activated.

The second signal is received by the processing and control unit 230 so that it can estimate 370 the direction of the gaze of the respective eye to be tracked inside the estimated region of interest 400.

On the basis of the estimated region of interest only relevant detecting elements 221, 222 are activated. In this way, the power consumption of the eye-tracking system 200 is optimized.

In the case in which the detecting elements 221, 222 comprise the infrared radiation sources 221 and the infrared detectors 222, the selectively activation step 340 comprises:
- selectively activating at least one infrared radiation source of the plurality of infrared radiation sources 221 so as to emit a respective infrared radiation towards the respective eye to be tracked,
- selectively activating at least one infrared detector of the plurality of infrared detectors 222 so as to detect a respective reflection signal reflected by the respective eye indicative of the at least one second gaze parameter in order to generate 360 the second signal.

On the basis of the estimated region of interest, the processing and control unit 230 activates one or more infrared radiation source 221 and one or more infrared detectors 222. The activated infrared radiation sources 221 emit an infrared radiation towards the respective eye to be tracked which in turn reflects such an infrared radiation. The activated infrared detectors 222 detect the reflection signal and generates 360 the second signal.

Preferably, the selectively activation step 340 comprises:
- selectively activating the detecting elements 221, 222 in time sequence.

In particular, on the basis of the estimated region of interest, the selectively activation step 340 may provide that the processing and control unit 230 activates at least one infrared radiation source 221 and at least one corresponding infrared detector 222 in time sequence.

For example, the selectively activation step 340 may provide that the processing and control unit 230 activates at least one infrared radiation source 221 and at least one corresponding infrared detector 222 while maintaining other infrared radiation sources 221 and/or infrared detectors 222 deactivated, and subsequently repeating this operation with other infrared radiation sources 221 and/or other infrared detectors 222. Preferably, the selectively activation step 340 comprises:
- selectively activating a first subset of the infrared radiation sources 221 on the basis of the estimated region of interest 400.

In particular, on the basis of the estimated region of interest, the selectively activation step 340 may provide that the processing and control unit 230 activates the infrared radiation sources 221 of the first subset.

Preferably, the selectively activation step 340 may provide that the processing and control unit 230 activates the infrared radiation sources 221 of the first subset in time sequence.

Preferably, the selectively activation step 340 comprises:
- selectively activating a second subset of the infrared detectors 222 for each activated infrared radiation source 221.

In particular, on the basis of the estimated region of interest, the selectively activation step 340 may provide that the processing and control unit 230 activates the infrared detectors 222 of the second subset for each activated infrared radiation source 221. Preferably, the selectively activation step 340 may provide that the processing and control unit 230 activates the infrared detectors 222 of the second subset in time sequence for each activated infrared radiation source 221.

Preferably, the selectively activation step 340 may comprise that the processing and control unit 230 activates, in time sequence, one or more infrared radiation sources 221 of the first subset and, for each activated infrared radiation source 221, one or more infrared detectors 222 of the second subset.

For example, consider that the predetermined regions of interest are in number equal to four, the infrared radiation sources 221 are in number equal to four, the infrared detectors 222 are in number equal to four.

In a first particular embodiment, the selectively activation step 340 may comprise that the processing and control unit 230 activates, in time sequence:
- a first infrared radiation source 221 and four infrared detectors 222 (maintaining a second, a third and a fourth infrared radiation source 221 deactivated),
- the second infrared radiation source 221 and four infrared detectors 222 (maintaining the first, the third and the fourth infrared radiation sources 221 deactivated),
- the third infrared radiation source 221 and four infrared detectors 222 (maintaining the first, the second and the fourth infrared radiation sources 221 deactivated).

In a second particular embodiment, the selectively activation step 340 may comprise that the processing and control unit 230 activates, in time sequence:
- the first infrared radiation source 221 and two infrared detectors 222 (maintaining the second, the third and the fourth infrared radiation source 221 deactivated, and two infrared detectors 222 deactivated),
- the second infrared radiation source 221 and three infrared detectors 222 (maintaining the first, the third and the fourth infrared radiation sources 221 deactivated, and one infrared detector 222 deactivated),
- the third infrared radiation source 221 and two infrared detectors 222 (maintaining the first, the second and the fourth infrared radiation sources 221 deactivated, and two infrared detectors 222 deactivated).

In a third particular embodiment, the selectively activation step 340 may comprise that the processing and control unit 230 activates, in time sequence:
- the first infrared radiation source 221 and three infrared detectors 222 (maintaining the second, the third and the fourth infrared radiation sources 221 deactivated, and one infrared detector 222 deactivated),
- the second infrared radiation source 221 and three infrared detectors 222 (maintaining the first, the third and the fourth infrared radiation sources 221 deactivated, and one infrared detector 222 deactivated),
- the third infrared radiation source 221 and three infrared detectors 222 (maintaining the first, the second and the fourth infrared radiation sources 221 deactivated, and one infrared detector 222 deactivated). From the description made, the characteristics of the head mountable device with an eye tracking system and the method for tracking a respective eye of a user wearing such a head mountable device, object of the present invention, are clear, as are the relative advantages.

The first detecting subsystem allows to perform a rough estimation of the direction of the gaze of a respective eye of the user that is improved by means of the second detecting subsystem. In this regard, only relevant detecting elements are activated, resulting in the reduction of the overall energy expenses and in an optimization of the power consumption of the eye-tracking system.

Moreover, the eye-tracking system strikes an optimal balance between gaze direction estimation accuracy and energy consumption. The first detecting subsystem handles the majority of the operations at a very low energy costs, while the second detecting subsystem is engaged for high-precision tasks.

On the basis of the precision level requirements, more detecting elements may be activated, in order to improve the accuracy of the gaze direction estimation.

Finally, it is clear that the head mountable device with an eye tracking system and the method for tracking a respective eye of a user wearing such a head mountable device thus conceived are susceptible of numerous modifications and variations, all of which are within the scope of the invention; moreover, all the details may be replaced by technically equivalent elements. In practice, the materials used, as well as their dimensions, can be of any type according to the technical requirements.

## Claims

1. Head mountable device (100) comprising an eye-tracking system (200), wherein the eye-tracking system (200) comprises:
- a first detecting subsystem (210) configured to detect at least one first gaze parameter of a respective eye to be tracked when a user wears the head mountable device (100) so as to generate a first signal, wherein the first detecting subsystem (210) is of a low power monitoring type,
- a second detecting subsystem (220) configured to detect at least one second gaze parameter of the respective eye to be tracked when a user wears the head mountable device (100) so as to generate a second signal, said second detecting subsystem (220) comprising a plurality of detecting elements (221, 222),
- a processing and control unit (230) associated to the first detecting subsystem (210) and to the second detecting subsystem (220), said processing and control unit (230) being configured to estimate a region of interest (400) among a predetermined plurality of regions of interest on the basis of said first signal, wherein the estimated region of interest (400) comprises the direction of the gaze of a respective eye to be tracked, the processing and control unit (230) being configured to selectively activate one or more of the detecting elements (221, 222) on the basis of the estimated region of interest (400) for subsequently estimating the direction of the gaze of the respective eye to be tracked inside the estimated region of interest (400) on the basis of said second signal.

2. Head mountable device (100) according to claim 1 wherein the detecting elements (221, 222) comprise:
- a plurality of infrared radiation sources (221) configured to be selectively activated by the processing and control unit (230) so as to emit a respective infrared radiation towards the respective eye to be tracked;
- a plurality of infrared detectors (222) configured to be selectively activated by the processing and control unit (230) so as to detect a respective reflection signal reflected by the respective eye indicative of the at least one second gaze parameter in order to generate the second signal.

3. Head mountable device (100) according to claim 1 or 2 wherein the processing and control unit (230) is configured to selectively activate the detecting elements (221, 222) in time sequence.

4. Head mountable device (100) according to claim 2 or 3 wherein the processing and control unit (230) is configured to selectively activate a first subset of said infrared radiation sources (221) on the basis of the estimated region of interest (400).

5. Head mountable device (100) according to claim 2 or 3 or 4 wherein the processing and control unit (230) is configured to selectively activate a second subset of said infrared detectors (222) for each activated infrared radiation source (221) on the basis of the estimated region of interest (400).

6. Head mountable device (100) according to any of the preceding claims comprises at least one lens (110), the first subsystem (210) comprising a plurality of sets of capacitive electrodes (211) being associated to the at least one lens (110), said plurality of sets of capacitive electrodes (211) being configured to detect said at least one first gaze parameter so as to generate the first signal.

7. Method (300) for tracking a respective eye of a user wearing a head mountable device (100) comprising an eye-tracking system (200), wherein the eye-tracking system (200) comprises a first detecting subsystem (210) of a low power monitoring type and a second detecting subsystem (220) which in turn comprises a plurality of detecting elements (221, 222), the method (300) comprising the steps:
- detecting (310) at least one first gaze parameter so as to generate (320) a first signal by means of the first detecting subsystem (210),
- estimating (330) a region of interest (400) among a predetermined plurality of regions of interest on the basis of the generated first signal by means of a processing and control unit (230), wherein the estimated region of interest (400) comprises the direction of the gaze of a respective eye to be tracked,
- selectively activating (340) one or more of the detecting elements (221, 222) on the basis of the estimated region of interest (400) by means of the processing and control unit (230) so as to detect (350) at least one second gaze parameter in order to generate (360) a second signal by means of the second detecting subsystem (220),
- estimating (370) the direction of the gaze of the respective eye to be tracked inside the estimated region of interest (400) on the basis of the generated second signal.

8. Method (300) according to claim 7 wherein the plurality of detecting elements (221, 222) comprises a plurality of infrared radiation sources (221) and a plurality of infrared detectors (222),
the selectively activation step (340) comprising:
- selectively activating at least one infrared radiation source of the plurality of infrared radiation sources (221) so as to emit a respective infrared radiation towards the respective eye to be tracked,
- selectively activating at least one infrared detector of the plurality of infrared detectors (222) so as to detect a respective reflection signal reflected by the respective eye indicative of the at least one second gaze parameter in order to generate (360) the second signal.

9. Method (300) according to claim 7 or 8 wherein the selectively activation step (340) comprises:
- selectively activating the detecting elements (221, 222) in time sequence.

10. Method (300) according to claim 8 or 9 wherein the selectively activation step (340) comprises:
- selectively activating a first subset of said infrared radiation sources (221) on the basis of the estimated region of interest (400).

11. Method (300) according to any claims from 8 to 10 wherein the selectively activation step (340) comprises:
- selectively activating a second subset of said infrared detectors (222) for each activated infrared radiation source (221).
